# EUROPEAN PATENT SPECIFICATION

(11) **EP 4 198 934 B1**
(45) Date of publication and mention of the grant of the patent: **20.08.2025**
(21) Application number: 21215733.3
(22) Date of filing: 17.12.2021
(51) Int. Cl.: G08B 21/22, G06Q 10/08

(54) **HUMAN PRESENCE DETECTION SYSTEM**
SYSTEM ZUR ERKENNUNG DER MENSCHLICHEN ANWESENHEIT
SYSTÈME DE DÉTECTION DE PRÉSENCE HUMAINE

(43) Date of publication of application: 21.06.2023
(73) Proprietor: Journey Protector Limited, Dublin D13V5W4 (IE)
(72) Inventor: Lawlor, Anne, Dublin (IE); Lawlor, Francis, Dublin (IE)
(74) Representative: Definition IP Limited

(56) References cited:
- GB-A- 2 529 000
- US-A1- 2008 211 668
- US-A1- 2010 265 069

## Description

### Technical Field

The present invention relates to systems for detecting human presence within enclosed spaces, for example, containers or trailers transported by vehicles, airplanes, trains or ships.

### Background

With great disparities in living conditions between different regions of the world, there is strong motivation for people to migrate from poorer or unstable countries to countries where the standard of living is better and opportunities more plentiful.

Migrating to a country legally through official points of entry is often difficult or impossible, so many people seek alternative means to cross borders. A very common method is for would-be migrants to stow away in containers of goods being transported by goods vehicles. This activity poses security risks, results in delays and cargo losses and can sadly result in injury or death to stowaways.

It is also common for criminals to attempt to gain unauthorised access to containers of goods during transportation for example to steal goods. Cargo theft from road freight transport is a particular problem which results in large financial losses to businesses and security threats to truck drivers.

Systems exist (often based on simple CCTV arrangements) for alerting drivers to the presence of stowaways within or attempts to gain unauthorised access to containers or trailers. However, these systems have flaws which are increasingly being worked around by experienced criminals. A key drawback of existing systems is that the responsibility falls solely on the driver for monitoring for potential stowaways within or illegal entry to the container or trailer and dealing with any issues that are discovered. This may be difficult and potentially dangerous for the driver. Moreover, such systems are redundant if the driver colludes with the activity. An example for a system for detecting human presence in an enclosure is given in US 2010/265069.

### Summary of the Invention

The invention is defined by a system as claimed in claim 1.

In accordance with a first aspect of the present invention there is provided a system for detecting human presence within an enclosed space. The system comprises: a detection unit for positioning within an enclosed space, and a remote computing system. The detection unit comprises one or more human presence detecting sensors configured to detect parameters within the enclosed space associated with human presence, a data processor and a wireless data transceiver. The one or more human presence detecting sensors are configured to communicate sensor signals to the data processor. The data processor is configured to process the sensor signals to generate sensor data corresponding to the sensor signals and control the wireless data transceiver to communicate the sensor data to the remote computing system. In use, the remote computing system has running thereon software providing a human presence detection function configured to process the sensor data to determine if the sensor data is potentially indicative of human presence within the enclosed space, and if so, generate a corresponding alert.

According to the invention the human presence detecting sensors comprise one or more environmental condition monitoring sensors for monitoring one or more environmental conditions within the enclosed space and one or more human activity detecting sensors for detecting human activity within the enclosed space.

According to the invention the human presence detection function is configured to determine that the sensor data is potentially indicative of human presence within the enclosed space if the sensor data from the one or more environmental condition monitoring sensors indicate one or more environmental conditions within the enclosed space is indicative of an anomalous condition.

According to the invention the anomalous condition is determined relative to ambient environmental conditions in the enclosed space established during a calibration process.

Optionally, the human presence detection function is configured to determine that the sensor data is potentially indicative of human presence within the enclosed space if the sensor data from the one or more environmental condition monitoring sensors indicate that a rate of change of one or more environmental conditions within the enclosed space is indicative of an anomalous condition.

Optionally, the data processor is configured to control the wireless data transceiver to communicate the sensor data to the remote computing system at predetermined intervals.

Optionally, the data processor has running thereon a sensor data monitoring function configured to monitor the sensor data to determine if it is indicative of an anomalous condition, and if so, said data processor is configured to control the wireless data transceiver to substantially immediately communicate the sensor data to the remote computing system.

According to the invention the detection unit comprises a further sensor configured to detect whether the enclosed space has been opened and communicate a corresponding sensor signal to the data processor, said data processor configured to process the sensor signal and to communicate corresponding sensor data to the remote computing system indicative of the enclosed space being opened, wherein responsive to receipt of the corresponding sensor data, said human presence detection function is configured to suspend determining if the sensor data is indicative of human presence within the enclosed space.

According to the invention the further sensor is configured to detect whether the enclosed space has been closed and communicate a further corresponding sensor signal to the data processor, said data processor configured to process the further corresponding sensor signal and to communicate further corresponding sensor data to the remote computing system indicative of the enclosed space being closed, wherein responsive to receipt of the further corresponding sensor data, said human presence detection function is configured to recalibrate the anomalous condition using sensor data received after the further sensor has detected the enclosed space has been closed.

Optionally, the further sensor is a light sensor.

Optionally, the detection unit further comprises a location detecting sensor configured to communicate location data to the data processor, said data processor configured to control the wireless data transceiver to communicate the location data to the remote computing system.

Optionally, the one or more environmental condition monitoring sensors comprise one or more of a CO2 detector for detecting CO2 concentrations within the enclosed space, a temperature sensor for detecting temperature within the enclosed space, and a humidity sensor for detecting humidity within the enclosed space.

Optionally, the detection unit is configured to be mounted within a goods container or trailer transported by a vehicle, airplane, train or ship.

According to a non claimed aspect, human presence within an enclosed space is concealed occupancy of and/or unauthorised entry to the enclosed space.

According to a non claimed example there is provided a detection unit for use in a system according to the first aspect, said detection unit configured to be positioned within an enclosed space. The detection unit comprises one or more human presence detecting sensors configured to detect parameters within the enclosed space associated with human presence, a data processor and a wireless data transceiver. The one or more human presence sensors are configured to communicate sensor signals to the data processor. The data processor is configured to process the sensor signals to generate sensor data corresponding to the sensor signals and control the wireless data transceiver to communicate the sensor data to a remote computing system.

According to a non claimed example there is provided a remote computing system for use in a system according to the first aspect. The remote computing system has running thereon software providing a human presence detection function configured to process the sensor data received from a detection unit according to the second aspect to determine if the sensor data is potentially indicative of human presence within the enclosed space, and if so, generate a corresponding alert.

In accordance with certain embodiments of the invention, techniques are provided for detecting the potential presence of humans who have concealed themselves in or gained unauthorised entry to an enclosed space, such as a container or trailer being transported by a heavy goods vehicle, airplane, train or container ship. Advantageously, the determination of whether or not humans are present in the enclosed space is performed at a remote computing system. This means that any party in situ (for example the driver of the goods vehicle) is not responsible for or involved with the detection of humans present within the enclosed space.

Various further features and aspects of the invention are defined in the claims.

### Brief Description of the Drawings

Embodiments of the present invention will now be described by way of example only with reference to the accompanying drawings where like parts are provided with corresponding reference numerals and in which:
Figure 1 provides a simplified schematic diagram of a system for detecting human presence within an enclosed space;
Figure 2 depicts a flow diagram depicting the process performed by the human presence detection function running on a remote monitoring system;
Figure 3 provides a simplified schematic diagram depicting a typical deployment of a human presence detection unit;
Figure 4a provides a simplified schematic diagram depicting an exploded view of components of a detection unit, and
Figure 4b provides a simplified schematic diagram depicting the detection unit shown in Figure 4a, assembled and fixed in an enclosed space.

### Detailed Description

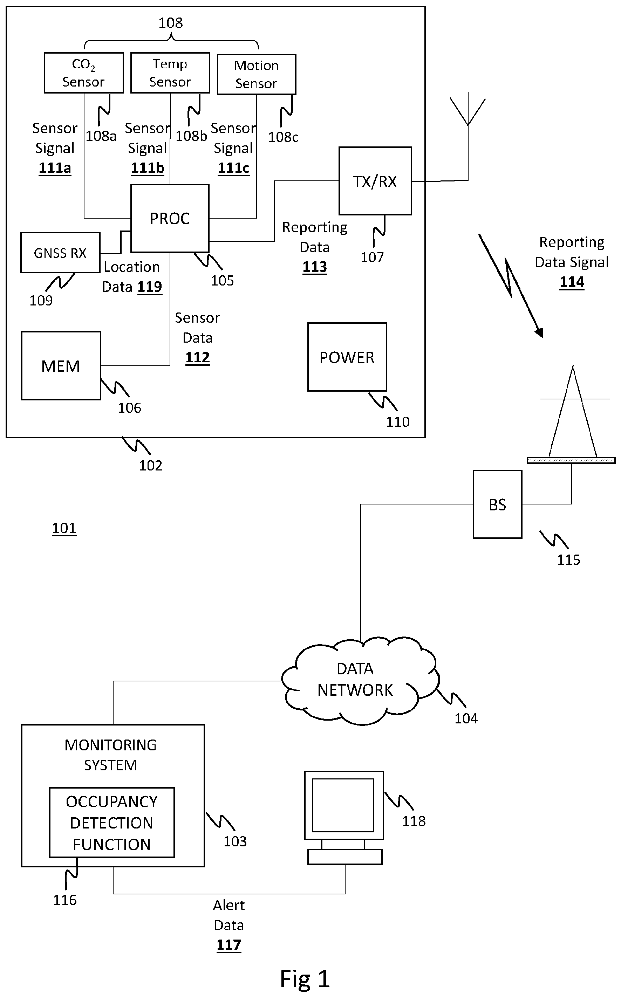

Figure 1 provides a simplified schematic diagram of a system 101 for detecting human presence within an enclosed space.

The system comprises a detection unit 102 which is communicatively connected to a remote monitoring system 103 via a data network 104.

The detection unit 102 comprises a processor unit 105 connected to a memory unit 106 and a wireless data transceiver 107. The processor unit 105 is further connected to a plurality of human presence detecting sensors 108.

The sensors 108 can be provided by any suitable sensors which are capable of detecting parameters within an enclosed space which are indicative of the presence of human beings.

The sensors are typically either environmental condition monitoring sensors or human activity detecting sensors.

Environmental condition monitoring sensors are configured to monitor parameters associated with environmental conditions within the enclosed space which would be expected to change if there were humans present within the enclosed space.

Human activity detecting sensors are configured to detect activity associated with humans present within the enclosed space.

In the example shown in Figure 1, the plurality of sensors 108 comprise two environmental condition monitoring sensors, namely a CO₂ sensor 108a and a temperature sensor 108b, and a single human activity detecting sensor, namely a motion detecting sensor 108c for detecting movement associated with humans.

The CO₂ sensor 108a is configured to measure CO₂ concentrations present in the air within the enclosed space. The CO₂ sensor 108a is typically calibrated to detect CO₂ concentrations associated with human occupants breathing within the enclosed space. The temperature sensor 108b is typically calibrated to detect changes in temperature likely to arise due to human occupancy of an enclosed space. The motion detecting sensor is typically provided by a suitable PIR (passive infrared) sensor 108c.

Alternative combinations of sensors or additional sensors can be used.

For example, other sensors for detecting relevant environmental conditions can include humidity sensors for detecting an increase in humidity associated with humans present within the enclosed space and volatile organic compound (VOC) sensors for measuring ambient concentrations of gasses associated with air quality within the enclosed space.

Other sensors for detecting human activity include EM emission detecting sensors, for example plasma emission detectors (PED) configured to detect Bluetooth EM emissions. Other suitable EM emission detecting sensors can be used which are configured to detect Bluetooth, Wi-Fi, cellular or other EM emissions associated with, for example, cellular mobile telephones located within the enclosed space.

Other sensors include tamper detection sensors which typically comprise one or more accelerometers calibrated to detect forces applied to the detection unit 102 indicative of an attempt to move, dislodge or damage the detection unit 102.

The detection unit 102 further comprises a location detecting sensor. Specifically, the processor unit 105 is further connected to a GNSS receiver 109, provided, for example by a GPS receiver. Typically, the GNSS receiver 109 is configured to periodically generate location data 119 indicative of a detected location of the detection unit 102. The GNSS receiver 109 communicates the location data 119 to the processor unit 105.

The detection unit 102 further comprises a power unit 110 which provides power to the components of the detection unit 102. Typically, the power unit 110 is provided by a battery. However, additionally, or alternatively, the power unit 110 may provide a connection for connecting the detection unit to an external power supply, for example the power supply of a vehicle within which the detection unit 102 is located. Where the power unit 110 is provided by a battery, the detection unit 102 can further comprise a coulomb counter for determining a charge level of the battery.

In use, the sensors 108 each detect a parameter associated with human presence within an enclosed space and generate corresponding sensor signals 111a, 111b, 111c which are communicated to the processor unit 105.

The processor unit 105 is configured to process these sensors signals and generate corresponding sensor data 112 which the processor unit 105 writes to the memory unit 106.

Periodically, after this data collection cycle, the processor unit 105 retrieves the sensor data 112 from the memory unit 106 to generate reporting data 113 which includes the sensor data 112 generated by the processor unit 105 from the sensor signals 111a, 111b, 111c collected over a predetermined period of time. The reporting data 113 typically comprises further data such as a unique identifier associated with the detection unit 102 and the location data 119 generated by the GNSS receiver 109.

The processor unit 105 communicates the reporting data 113 to the wireless data transceiver 107 which transmits it in the form of a wireless data reporting signal 114 to a wireless data receiving base station 115.

The reporting data 113 is then communicated on from the base station 115 via the data network 104 to the remote monitoring system 103.

Typically, the wireless data transceiver 107 is a data transceiver for sending and receiving data to, and receiving data from, a cellular mobile telephone network. Accordingly, the base station 115 is a base station of an appropriate cellular mobile telephone network. The base station 115 is connected to the data network 104 via an access point in the mobile telephone network's core network (not shown).

The data network 104 is typically provided by the combination of data telecommunication networks that form the "internet".

The remote monitoring system 103 has running thereon software providing a human presence detection function 116 which is configured to process the reporting data 113 to generate an estimate of the likelihood that the sensor data 112 generated by the processor unit 105 is indicative of human presence within an enclosed space in which the detection unit 102 is situated.

The remote monitoring system 103 is provided by a suitable remote computing system, for example one or more suitably arranged application servers.

If the human presence detection function 116 determines that the sensor data is indicative of human occupancy of the enclosed space, then the human presence detection function 116 is configured to generate alert data 117 which can be communicated to a computing device 118 connected to the remote monitoring system 103.

Responsive to receipt of the alert data 117, the computing device 118 is configured to generate an alert signal for an operative, said signal to alert the operative that human presence has potentially been detected in the enclosed space in which the detection unit 102 is situated.

The computing device 118 can be provided by any suitable computing device that can be used by an operative, for example a personal computer, tablet, smartphone, and so on.

The computing device 118 may be directly connected to the remote monitoring system 103 or may be connected by an intermediate data network and wired or wireless network connection.

In some examples, the computing device 118 has running thereon a web browser application via which the computing device 118 accesses one or more web pages served by the remote monitoring system 103. These web pages provide an interface enabling a user of the computing device 118 to monitor sensor data generated by the detection unit 102 and in particular an interface by which alerts can be generated indicating that human presence has potentially been detected. These alerts can be in any suitable format including, for example, visual alerts (for example symbols and/or messages displayed on a display screen of the computing device 118) and/or audio alerts (for example sounds created played through a speaker of the computing device 118).

The human presence detection function 116 can be configured to generate the estimate of the likelihood that the sensor data 112 is indicative of human presence using any suitable data processing technique.

In certain examples, this is achieved by passing the sensor data 112 through a human presence likelihood algorithm.

In such examples, the algorithm receives as an input the sensor data 112 from the reporting data 113 and processes this to generate an output which is indicative of a likelihood of human presence.

The output can be in any suitable form, for example: a numerical value between 1 and 0 where the closer the value to 1, the higher the predicted likelihood of human presence is; a binary output, for example one of an output corresponding to "nothing detected" or "presence detected"; or one of a predetermined number of outputs, for example "presence not detected"; "uncertain if presence detected" and "highly likely presence detected".

The algorithm itself can be provided by any suitable technique.

In simpler examples, the algorithm can immediately generate an output corresponding to a high likelihood of human activity being detected if the sensor data indicates that any of the human activity detecting sensors have detected potential human activity.

Similarly, the algorithm will generate an output corresponding to a high likelihood of human presence being detected if the sensor data indicates that one or more of the environmental condition parameters (for example temperature or CO₂ concentration) being detected by the environmental condition monitoring sensors is indicative of an anomalous condition.

In other examples, the algorithm will generate an output corresponding to a high likelihood of human presence being detected if the sensor data indicates that a rate of change of one more of the environmental condition parameters (for example rate of change of temperature or rate of change of CO₂ concentration) being detected by the environmental condition monitoring sensors is indicative of an anomalous condition.

In more advanced implementations, the algorithm can implement a statistical technique in which the sensor data for each sensor collected during the data collection cycle is attributed a predetermined weighting such that more suspicious or unusual sensor data is attributed a higher weighting. These weightings are then summed to generate an output value which is indicative of likelihood of human presence in the enclosed space.

In this way, for example, isolated incidents of human activity detected by the human activity detecting sensors, which on their own might not be considered particularly suspicious can be combined with data from the environmental condition monitoring sensors (for example, below threshold increases in temperature or CO₂ concentration) which also, on their own, might not be considered particularly suspicious to identify potential human presence. In this way, the algorithm can generate a suitable output taking into account parameters detected by a number of sensors, which individually would not be suspicious, but combined are likely to be suspicious.

In other examples, the algorithm can implement more advanced statistical data processing techniques, for example Bayesian techniques, for example combining previously collected sensor data with more recently collected sensor data.

In further examples, the algorithm may be implemented by machine learning techniques, for example a neural network trained to generate an output, based on sensor data input, indicative of a likelihood of the sensor data being indicative of human presence.

Such thresholds could be associated with any suitable parameters derivable from the sensor data exceeding a threshold value indicative of human presence.

For example, such thresholds could relate to: absolute parameter values being exceeded (for example a threshold CO₂ concentration level being exceeded); threshold rates of change being exceeded (for example the temperature increasing at a rate above a threshold rate); number of detection events being exceeded (for example an above threshold number of movements detected by the motion detector during a given period of time), and so on.

Alternatively, or additionally, the algorithm can apply a weighting to each of these detected parameters and combine them with the output of the algorithm being a function of this combined value.

For example, an increase in CO₂ concentration could be given a weighting based on the extent of the increase; an increase in temperature given a weighting based on the extent of the increase, and a weighting generated based on the number of movements detected during the period of time of the CO₂ concentration and temperature increases. The algorithm would then combine these weightings to generate the output.

It will be understood that human presence within an enclosed space can result from concealed human occupancy of and/or unauthorised human entry to the enclosed space. Concealed human occupancy of an enclosed space will typically result from one or more stowaways gaining access to a container or trailer during transportation and remaining within the container or trailer until they reach their desired destination. Unauthorised human entry to an enclosed space will typically result from a person gaining unauthorised access to a container or trailer to steal goods from the container or trailer.

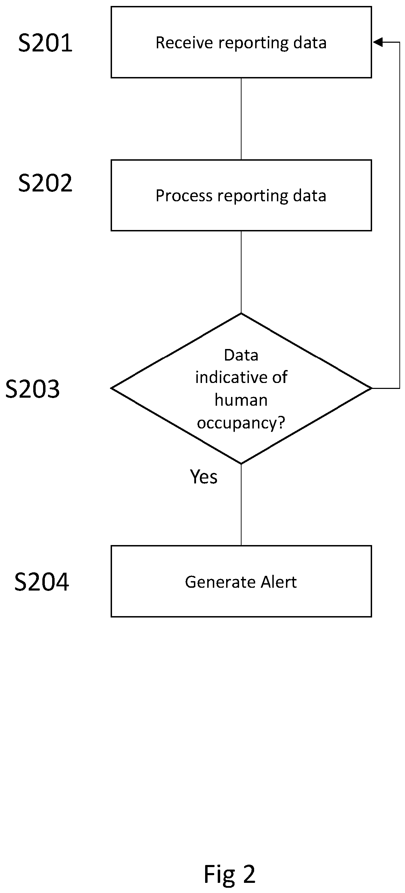

Figure 2 depicts a flow diagram depicting the process performed by the human presence detection function 116 running on the remote monitoring system 103.

At a first step S201 the reporting data 113 is received; at a second step S202 the reporting data 113 is processed in accordance with the human presence likelihood algorithm; if, at a third step S203, it is determined that the sensor data provided in the reporting data 113 is indicative of the presence of human beings, at a fourth step S204 alert data 117 is generated and sent to the computing device 118.

Typically, the processor unit 105 is configured to communicate the reporting data 113 to the remote monitoring system 103 at predetermined intervals (for example, once every 30 minutes). This can reduce power consumption on the detection unit.

However, in certain examples, the processor unit 105 has running thereon a sensor data monitoring function which is configured to continuously monitor the sensor data 112 being generated to determine if one or more of the sensor signals are indicative of parameters being exceeded which suggest a particularly high likelihood of human presence.

Such parameters may include sensor data generated from one or more human activity sensors suggesting a high degree of potential human activity and/or sensor data generated from one or more environmental condition monitoring sensors exceeding thresholds such as an above threshold rate of change of an environmental condition. Such parameters may include, for example: an environmental condition monitoring sensor detecting an above threshold rate of change of an environmental condition such as CO₂ concentration or temperature, or a human activity sensor detecting a high-level of potential activity, for example a tamper detection sensor detecting sudden and sustained forces being applied to the detection unit 102.

In such examples, if the sensor data monitoring function determines that such parameters have been exceeded, the processor unit 105 is configured to immediately communicate the reporting data 113 to the human presence detection function 116 with, for example, suitable alarm data, indicating that human presence may have been detected. In certain such examples, the human presence detection function 116 may be configured to bypass the human presence likelihood algorithm and immediately communicate the alert data 117 to the computing device 118.

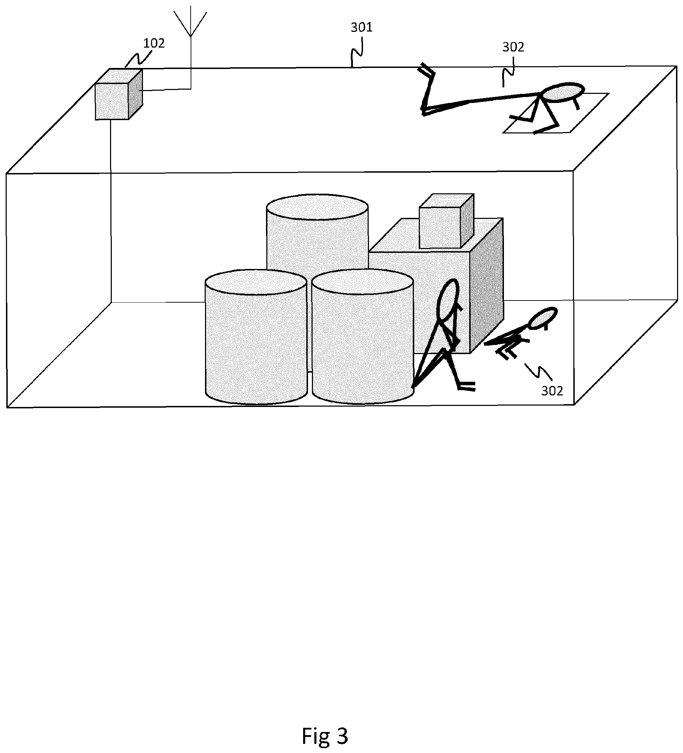

Figure 3 provides a simplified schematic diagram depicting a typical deployment of the detection unit 102.

The detection unit 102 is mounted within an enclosed space 301, for example a goods container mounted on the trailer of a good vehicle.

As described above, the sensors 108 of the detection unit 102 are configured to generate sensor signals corresponding to the conditions within the enclosed space 301. In the event that enclosed space 301 contains humans 302, conditions in the enclosed space 301 will reflect this and be detected by the sensors 108. This will be reflected in the reporting data 113 communicated to the remote monitoring system 103, and the human presence detection function 116 will trigger an appropriate alert at the computing device 118. Appropriate action can then be taken, for example the apprehension of the human occupants 302. The inclusion of location data 119 generated by the GNSS receiver 109 enables the location of the enclosed space 301 to be determined and assists in appropriate action being taken.

As described above, in certain examples, the algorithm detects the potential presence of human occupants in the enclosed space based on whether or not the sensor data indicates one or more threshold values associated with the environmental conditions within the enclosed space have been exceeded.

Typically, these threshold values include temperature and CO₂ concentration.

According to the invention, during an initialising phase, the processor unit 105 is configured to control the environmental condition monitoring sensors (e.g. the CO₂ sensor and temperature sensor) to take initial readings which are then communicated to the human presence detection function 116 to calibrate the threshold values used by the human presence detection algorithm to the ambient conditions within the enclosed space.

In certain settings, the environmental conditions in an enclosed space may change due to factors unrelated to human occupants of the enclosed space.

In particular, cargo may be loaded into a goods container or unloaded from a goods container which affects the ambient temperature and/or CO₂ concentration.

In certain examples, the detection unit 102 is equipped with a light sensor to detect changes of light levels within the enclosed space consistent with the opening of loading doors for cargo loading or unloading.

The processor unit 105 is configured to convert the sensor signal from the light sensor into sensor data indicative that a cargo-loading event has been detected which is communicated to the remote monitoring system 103 as part of reporting data 113.

Responsive to receipt of the sensor data indicative that a cargo-loading event has been detected, the human presence detection function 116 is configured to suspend processing of the sensor data to detect human presence. This prevents spurious false alarms being generated that are a result of cargo loading or unloading rather than human presence being detected.

The human presence detection function 116 can suspend processing of the sensor data to detect human presence for a predetermined time associated with a preselected time period or can resume processing of the sensor data to detect human presence once further reporting data is received from the detection unit 102 indicating that the light sensor has detected a change in light level indicative of the loading doors being closed.

The human presence detection function 116 resumes processing of the sensor data 112 to detect human presence when the sensor data 112 indicates that the event that gives rise to a change in conditions is over. For example, the sensor data indicating that the light sensor is no longer detecting light levels consistent with loading doors being opened.

The loading or unloading of cargo into the enclosed space may change the ambient environmental conditions in the enclosed space (for example due to the temperature of new cargo and/or CO₂ emissions from the new cargo). Accordingly, in certain examples, before human presence detection function 116 resumes processing of the sensor data 112 to detect human presence, a recalibration operation may be performed where the processor unit 105 is configured to control the environmental condition monitoring sensors (e.g. the CO₂ sensor and temperature sensor) to take recalibration readings which are then communicated to the human presence detection function 116 to recalibrate the threshold values used by the human presence detection algorithm to the ambient conditions within the enclosed space. In this way, the human presence detection function 116 will process the sensor data 112 based on the new prevailing conditions within the enclosed space.

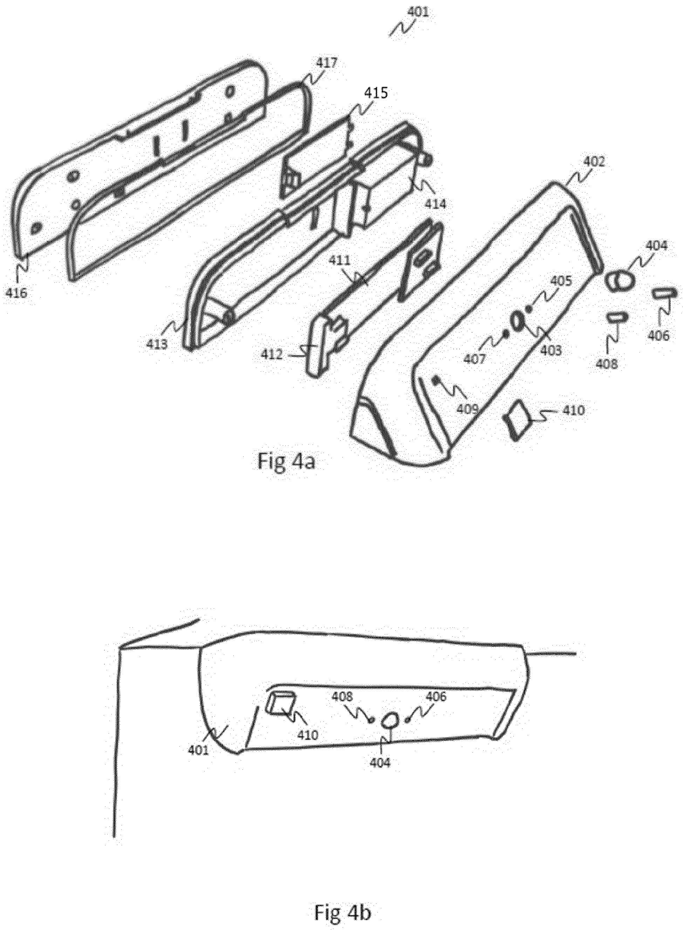

Figure 4a provides a simplified schematic diagram depicting an exploded view of components of a detection unit 401 arranged in accordance with an exemplary embodiment of the invention.

The detection unit 401 comprises an outer housing 402 with a first aperture 403 for receiving a PIR sensor 404, a second aperture 405 for receiving a temperature sensor 406 and a third aperture 407 for receiving a light sensor 408.

The outer housing 402 comprises a further aperture 409 providing an air inlet for a CO₂ sensor. The further aperture 409 is covered by a CO₂ sensor cover 410.

The detection unit 401 further comprises a PCB unit 411 which incorporates a CO₂ sensor unit 412 along with other components such as the processor, memory, other sensors (e.g. the GNSS receiver) and the data transceiver.

The detection unit 401 further comprises a rear cover 413 which include a battery compartment 414 in which is located a battery power supply. The battery compartment 414 is covered by a battery cover 415.

When assembled, the detection unit 401 is mounted to an internal surface of an enclosed space via a fixing bracket 416. A seal 417 is provided between the fixing bracket 416 and the rear cover 413.

Figure 4b provides a schematic diagram depicting the assembled detection unit 401 fixed in an upper corner of an enclosed space. The outer housing 402 of the detection unit 401 may typically have a form factor and colouring making it unobtrusive.

In certain embodiments, the wireless data transceiver 107 can receive data from the remote monitoring system 103, for example control data for controlling aspects of the operation of the detection unit 102.

As will be understood, in a typical arrangement, a single remote monitoring system will receive sensor data from multiple detection units installed in multiple different enclosed spaces.

A typical application is a goods logistics organisation responsible for multiple goods vehicles, all of which have installed a detection unit of the type described above. From a single centralised system, an entire fleet of goods vehicles can be monitored and if human presence detected, appropriate action taken. For example, the driver of a goods vehicle for which an alert has been generated by the human presence detection function, can be contacted, for example by phone, and instructed to divert to a location where the container being transported can be searched by the appropriate authorities. Alternatively, the system can be used to detect human presence within other types of enclosed space such as a room within a public building such as a museum or art gallery. Advantageously, in such applications the system can assist with the process of ensuring that all visitors have left a public building before it is secured.

All of the features disclosed in this specification (including any accompanying claims, abstract and drawings), and/or all of the steps of any method or process so disclosed, may be combined in any combination, except combinations where at least some of such features and/or steps are mutually exclusive. Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

It will be appreciated that various embodiments of the present disclosure have been described herein for purposes of illustration, and that various modifications may be made without departing from the scope of the present disclosure. Accordingly, the various embodiments disclosed herein are not intended to be limiting, with the true scope being indicated by the following claims.

## Claims

1. A system (101) for detecting human presence within an enclosed space, said system comprising:
a detection unit (102) for positioning within an enclosed space, and a remote computing system (103),
said detection unit (102) comprising one or more human presence detecting sensors (108) configured to detect parameters within the enclosed space associated with human presence, a data processor (105) and a wireless data transceiver (107), said one or more human presence detecting sensors (108) configured to communicate sensor signals to the data processor (105), said data processor (105) configured to process the sensor signals to generate sensor data corresponding to the sensor signals and control the wireless data transceiver (107) to communicate the sensor data to the remote computing system (103), wherein in use the remote computing system (103) has running thereon software providing a human presence detection function (116) configured to process the sensor data to determine if the sensor data is potentially indicative of human presence within the enclosed space, and if so, generate a corresponding alert, wherein the human presence detecting sensors (108) comprise one or more environmental condition monitoring sensors (108a,108b) for monitoring one or more environmental conditions within the enclosed space and one or more human activity detecting sensors (108c) for detecting human activity within the enclosed space, wherein the human presence detection function (116) is configured to determine that the sensor data is potentially indicative of human presence within the enclosed space if the sensor data from the one or more environmental condition monitoring sensors (108a,108) indicate one or more environmental conditions within the enclosed space is indicative of an anomalous condition, wherein the anomalous condition is determined relative to ambient environmental conditions in the enclosed space established during a calibration process, wherein the data processor (105) is configured to control the human presence detecting sensors (108) to take initial readings which are then communicated to the human presence detection function (116) to calibrate the threshold values used by a human presence detection algorithm to the ambient conditions within the enclosed space, wherein the detection unit (102) comprises a further sensor configured to detect whether the enclosed space has been opened and communicate a corresponding sensor signal to the data processor (105), said data processor (105) configured to process the sensor signal and to communicate corresponding sensor data to the remote computing system (103) indicative of the enclosed space being opened, wherein responsive to receipt of the corresponding sensor data, said human presence detection function is configured to suspend determining if the sensor data is indicative of human presence within the enclosed space, wherein the further sensor is configured to detect whether the enclosed space has been closed and communicate a further corresponding sensor signal to the data processor (105), said data processor (105) configured to process the further corresponding sensor signal and to communicate further corresponding sensor data to the remote computing system (103) indicative of the enclosed space being closed, wherein responsive to receipt of the further corresponding sensor data, said human presence detection function is configured to recalibrate the anomalous condition using sensor data received after the further sensor has detected the enclosed space has been closed.

2. A system (101) according to claim 1, wherein the human presence detection function (116) is configured to determine that the sensor data is potentially indicative of human presence within the enclosed space if the sensor data from the one or more environmental condition monitoring sensors (108) indicate that a rate of change of one or more environmental conditions within the enclosed space is indicative of an anomalous condition.

3. A system (101) according to claim 1 or 2, wherein the further sensor is a light sensor.

4. A system (101) according to claim 1, wherein the one or more environmental condition monitoring sensors comprise one or more of a CO₂ detector for detecting CO₂ concentrations within the enclosed space, a temperature sensor for detecting temperature within the enclosed space, and a humidity sensor for detecting humidity within the enclosed space.

5. A system (101) according to any previous claim, wherein the detection unit (102) is configured to be mounted within a goods container or trailer transported by a vehicle, airplane, train or ship.

## Patentansprüche

1. System (101) zum Erkennen menschlicher Anwesenheit in einem geschlossenen Raum, wobei das System umfasst:
eine Erkennungseinheit (102) zum Positionieren innerhalb eines geschlossenen Raumes und ein Fernrechensystem (103),
wobei die Erkennungseinheit (102) einen oder mehrere Sensoren (108) zum Erkennen menschlicher Anwesenheit umfasst, die konfiguriert sind, um Parameter innerhalb des geschlossenen Raums zu erkennen, die mit menschlicher Anwesenheit verknüpft sind, einen Datenprozessor (105) und einen drahtlosen Daten-Sender-Empfänger (107), wobei der eine oder mehrere Sensoren (108) zum Erkennen menschlicher Anwesenheit konfiguriert sind, um Sensorsignale dem Datenprozessor (105) zu kommunizieren, der Datenprozessor (105) konfiguriert ist, um die Sensorsignale zu verarbeiten, um den Sensorsignalen entsprechende Sensordaten zu erzeugen und den drahtlosen Daten-Sender-Empfänger (107) zu steuern, um die Sensordaten dem Fernrechensystem (103) zu kommunizieren, wobei im Betrieb auf dem Fernrechensystem (103) Software läuft, die eine Funktion zum Erkennen menschlicher Anwesenheit (116) bereitstellt, die konfiguriert ist, um die Sensordaten zu verarbeiten, um zu bestimmen, ob die Sensordaten möglicherweise auf menschliche Anwesenheit innerhalb des geschlossenen Raumes hinweisen, und wenn ja, einen entsprechenden Alarm zu erzeugen, wobei die Sensoren (108) zum Erkennen menschlicher Anwesenheit einen oder mehrere Sensoren zur Überwachung von Umgebungsbedingungen (108a, 108b) zur Überwachung einer oder mehrerer Umgebungsbedingungen innerhalb des geschlossenen Raumes und einen oder mehrere Sensoren zum Erkennen menschlicher Aktivität (108c) zum Erkennen menschlicher Aktivität innerhalb des geschlossenen Raumes umfassen, wobei die Funktion zum Erkennen menschlicher Anwesenheit (116) konfiguriert ist, um zu bestimmen, dass die Sensordaten möglicherweise auf menschliche Anwesenheit innerhalb des geschlossenen Raumes hinweisen, wenn die Sensordaten von dem einen oder den mehreren Sensoren zur Überwachung von Umgebungsbedingungen (108a, 108) angeben, dass eine oder mehrere Umgebungsbedingungen innerhalb des geschlossenen Raumes auf eine anomale Bedingung hinweisen, wobei die anomale Bedingung in Bezug auf Umgebungsbedingungen im geschlossenen Raum, die während eines Kalibrierungsprozesses ermittelt werden, bestimmt wird, wobei der Datenprozessor (105) konfiguriert ist, um die Sensoren zum Erkennen menschlicher Anwesenheit (108) zu steuern, um anfängliche Messwerte anzunehmen, die dann der Funktion zum Erkennen menschlicher Anwesenheit (116) kommuniziert werden, um die von einem Algorithmus zum Erkennen menschlicher Anwesenheit verwendeten Schwellenwerte auf die Umgebungsbedingungen innerhalb des geschlossenen Raumes zu kalibrieren, wobei die Erkennungseinheit (102) einen weiteren Sensor umfasst, der konfiguriert ist, um zu erkennen, ob der geschlossene Raum geöffnet worden ist, und ein entsprechendes Sensorsignal dem Datenprozessor (105) zu kommunizieren, wobei der Datenprozessor (105) konfiguriert ist, um das Sensorsignal zu verarbeiten und entsprechende Sensordaten dem Fernrechensystem (103) zu kommunizieren, die darauf hinweisen, dass der geschlossene Raum geöffnet wird, wobei die Funktion zum Erkennen menschlicher Anwesenheit als Reaktion auf den Empfang der entsprechenden Sensordaten konfiguriert ist, um die Bestimmung, ob die Sensordaten auf die Anwesenheit von Menschen in dem geschlossenen Raum hinweisen, auszusetzen, wobei der weitere Sensor konfiguriert ist, um zu erkennen, ob der geschlossene Raum geschlossen worden ist, und ein weiteres entsprechendes Sensorsignal dem Datenprozessor (105) zu kommunizieren, wobei der Datenprozessor (105) konfiguriert ist, um das weitere entsprechende Sensorsignal zu verarbeiten, und weitere entsprechende Sensordaten dem Fernrechensystem (103) zu kommunizieren, die darauf hinweisen, dass der geschlossene Raum geschlossen wird, wobei die Funktion zum Erkennen menschlicher Anwesenheit als Reaktion auf den Empfang der weiteren entsprechenden Sensordaten konfiguriert ist, um den anomalen Zustand unter Verwendung von Sensordaten neu zu kalibrieren, die empfangen wurden, nachdem der weitere Sensor erkannt hat, dass der geschlossene Raum geschlossen worden ist.

2. System (101) nach Anspruch 1, wobei die Funktion zum Erkennen menschlicher Anwesenheit (116) konfiguriert ist, um zu bestimmen, dass die Sensordaten möglicherweise auf die Anwesenheit von Menschen in dem geschlossenen Raum hinweisen, wenn die Sensordaten von einem oder mehreren Sensoren zur Überwachung von Umgebungsbedingungen (108) angeben, dass eine Änderungsrate einer oder mehrerer Umgebungsbedingungen in dem geschlossenen Raum auf einen anomalen Zustand hinweist.

3. System (101) nach Anspruch 1 oder 2, wobei der weitere Sensor ein Lichtsensor ist.

4. System (101) nach Anspruch 1, wobei der eine oder mehrere Sensoren zur Überwachung der Umgebungsbedingungen einen oder mehrere von einem CO₂ -Detektor zum Erkennen der CO₂ -Konzentration innerhalb des geschlossenen Raumes, einen Temperatursensor zum Erkennen der Temperatur innerhalb des geschlossenen Raumes und einen Feuchtigkeitssensor zum Erkennen der Feuchtigkeit innerhalb des geschlossenen Raumes umfassen.

5. System (101) nach einem vorstehenden Anspruch, wobei die Erkennungseinheit (102) konfiguriert ist, um in einem Warenbehälter oder Anhänger, der von einem Fahrzeug, Flugzeug, Zug oder Schiff transportiert wird, montiert zu werden.

## Revendications

1. Système (101) de détection de présence humaine dans un espace clos, ledit système comprenant :
une unité de détection (102) pour le positionnement dans un espace clos, et un système informatique distant (103),
ladite unité de détection (102) comprenant un ou plusieurs capteurs de détection de présence humaine (108) configurés pour détecter des paramètres dans l'espace clos associés à la présence humaine, un processeur de données (105) et un émetteur-récepteur de données sans fil (107), lesdits un ou plusieurs capteurs de détection de présence humaine (108) étant configurés pour communiquer des signaux de capteur au processeur de données (105), ledit processeur de données (105) étant configuré pour traiter les signaux de capteur afin de générer des données de capteur correspondant aux signaux de capteur et commander l'émetteur-récepteur de données sans fil (107) pour communiquer les données de capteur au système informatique distant (103), dans lequel, en fonctionnement, le système informatique distant (103) a un logiciel s'exécutant sur celui-ci, fournissant une fonction de détection de présence humaine (116) configurée pour traiter les données de capteur afin de déterminer si les données de capteur sont potentiellement indicatives d'une présence humaine dans l'espace clos et, le cas échéant, générer une alerte correspondante, dans lequel les capteurs de détection de présence humaine (108) comprennent un ou plusieurs capteurs de surveillance de conditions environnementales (108a, 108b) pour surveiller une ou plusieurs conditions environnementales dans l'espace clos et un ou plusieurs capteurs de détection d'activité humaine (108c) pour détecter une activité humaine dans l'espace clos, dans lequel la fonction de détection de présence humaine (116) est configurée pour déterminer que les données de capteur sont potentiellement indicatives d'une présence humaine dans l'espace clos si les données de capteurs provenant des un ou plusieurs capteurs de surveillance des conditions environnementales (108a, 108) indiquent qu'une ou plusieurs conditions environnementales dans l'espace clos sont indicatives d'une condition anormale, dans lequel la condition anormale est déterminée par rapport à des conditions environnementales ambiantes dans l'espace clos établies lors d'un processus d'étalonnage, dans lequel le processeur de données (105) est configuré pour commander les capteurs de détection de présence humaine (108) pour effectuer des mesures initiales qui sont ensuite communiquées à la fonction de détection de présence humaine (116) pour étalonner les valeurs de seuil utilisées par un algorithme de détection de présence humaine aux conditions ambiantes dans l'espace clos, dans lequel l'unité de détection (102) comprend un autre capteur configuré pour détecter si l'espace clos a été ouvert et communiquer un signal de capteur correspondant au processeur de données (105), ledit processeur de données (105) étant configuré pour traiter le signal de capteur et pour communiquer des données de capteur correspondantes au système informatique distant (103) indicatives de l'espace clos qui est ouvert, dans lequel, en réponse à la réception des données de capteur correspondantes, ladite fonction de détection de présence humaine est configurée pour suspendre la détermination si les données de capteur sont indicatives d'une présence humaine dans l'espace clos, dans lequel l'autre capteur est configuré pour détecter si l'espace clos a été fermé et communiquer un autre signal de capteur correspondant au processeur de données (105), ledit processeur de données (105) étant configuré pour traiter l'autre signal de capteur correspondant et pour communiquer d'autres données de capteur correspondantes au système informatique distant (103) indicatives de l'espace clos qui est fermé, dans lequel, en réponse à la réception des autres données de capteur correspondantes, ladite fonction de détection de présence humaine est configurée pour recalibrer la condition anormale en utilisant des données de capteur reçues après que l'autre capteur a détecté que l'espace clos a été fermé.

2. Système (101) selon la revendication 1, dans lequel la fonction de détection de présence humaine (116) est configurée pour déterminer que les données de capteur sont potentiellement indicatives d'une présence humaine dans l'espace clos si les données de capteur provenant des un ou plusieurs capteurs de surveillance des conditions environnementales (108) indiquent qu'un taux de changement d'une ou plusieurs conditions environnementales dans l'espace clos est indicatif d'une condition anormale.

3. Système (101) selon la revendication 1 ou 2, dans lequel l'autre capteur est un capteur de lumière.

4. Système (101) selon la revendication 1, dans lequel les un ou plusieurs capteurs de surveillance des conditions environnementales comprennent un ou plusieurs parmi un détecteur de CO₂ pour détecter des concentrations de CO₂ dans l'espace clos, un capteur de température pour détecter une température dans l'espace clos, et un capteur d'humidité pour détecter une humidité dans l'espace clos.

5. Système (101) selon l'une quelconque des revendications précédentes, dans lequel l'unité de détection (102) est configurée pour être montée à l'intérieur d'un conteneur de marchandises ou d'une remorque transportée par un véhicule, un avion, un train ou un navire.
